# EUROPEAN PATENT SPECIFICATION

(11) **EP 1 408 582 B1**
(45) Date of publication and mention of the grant of the patent: **18.07.2007**
(21) Application number: 03026989.8
(22) Date of filing: 20.11.2001
(51) Int. Cl.: H01Q 9/04, H01Q 1/24

(54) **Built-in antenna for a mobile radio**
Eingebaute Antenne für ein mobiles Funkgerät
Antenne incorporée pour un appareil de radiotéléphonie

(30) Priority: 22.11.2000 JP 2000355437
(43) Date of publication of application: 14.04.2004
(62) Divisional of application: 01127339.8
(73) Proprietor: MATSUSHITA ELECTRIC INDUSTRIAL CO., LTD, Kadoma-shi, Osaka-fu (JP)
(72) Inventor: Iwai, Hiroshi, Katano-shi Osaka-fu 576-0021 (JP); Yamamoto, Atsushi, Osaka-shi Osaka-fu (JP); Ogawa, Koichi, Hirakata-shi Osaka-fu (JP); Kamaeguchi, Shinji, Kadoma-shi Osaka-fu (JP); Takahashi, Tsukasa, Kawasaki-shi Kanagawa-ken (JP); Yamada, Kenichi, Yokohama-shi Kanagawa-ken (JP)
(74) Representative: Lang, Johannes

(56) References cited:
- EP-A- 0 867 967
- EP-A- 0 872 912
- WO-A-99/43043
- DE-A- 19 737 544
- JP-A- 2000 216 630
- US-A- 6 014 113

## Description

### Field of the Invention

The present invention relates to mobile radios and, more particularly, to mobile radios in which antennas are equipped for receiving and transmitting radio waves exemplified as mobile phone terminals.

### Description of the Background Art

The technology relating to mobile communications which is commonly applied to mobile phones, for example, has recently seen a rapid growth. In such mobile phones, antennas are considered especially important, and in keeping with the mobile terminals getting smaller, the antennas are required to be downsized to fit therein.

In DE-A-197 37 544, it is disclosed a flat antenna, in which the resonant elements and the base plate are connected with each other, and are not parallel to each other. EP-A-0 867 987 discloses an antenna for wireless communications devices, comprising an antenna plate functioning as a radiator, a feed element to feed the radiator, and attachment elements to attach the antenna to a wireless communications device which comprises an electrically conductive earth plane.

With reference to the accompanying drawing, described below is an exemplary mobile radio antenna conventionally equipped in mobile phone terminals.

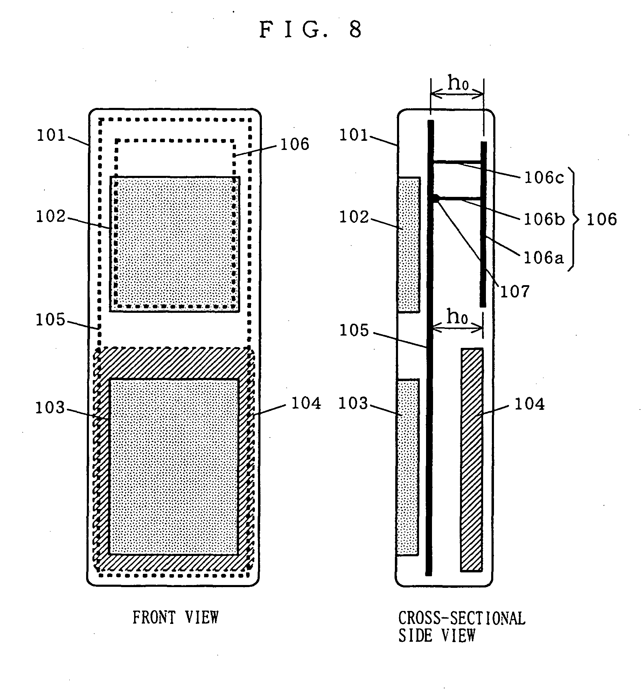

FIG. 8 schematically shows front and cross-sectional side views of a mobile phone terminal, e.g., mobile radio, which has a conventional mobile radio antenna equipped therein.

In FIG. 8, the conventional mobile phone terminal includes a cabinet 101, a display 102 exemplified by a liquid crystal display, a key section 103 exemplified by a ten-key numeric pad, a battery 104, a built-in antenna 106, and a base plate 105 for electrical connections among those constituents. The built-in antenna 106 is structured by an antenna element 106a of a planar configuration, and two metal leads 106b and 106c. This type of built-in antenna 106 is generally called as a planar inverted F antenna (PIFA). The antenna element 106a is provided with a predetermined voltage from a supply point 107 on the base plate 105 via the metal lead 106b. The antenna element 106a is connected to a ground (GND) level of the base plate 105 via the metal lead 106c. Here, the length of a perpendicular from the antenna element 106a to the base plate 105, i.e. , space therebetween, is defined as an antenna height h₀.

This antenna height h₀ considerably affects the characteristics of the built-in antenna 106 including resonant frequency and frequency bandwidth, i.e., the larger the height h₀, the better the antenna characteristics. Other than the height h₀, the deciding factors for the antenna characteristics are the size of the antenna element 106a, the positional relationship between the metal leads 106b and 106c, and the like.

However, the conventional mobile radio antenna structured as above has a problem that the larger height h₀ results in the thicker mobile phone terminals, thus failing in downsizing.

In order to reduce the thickness of the mobile phone terminals, on the other hand, there is no other choice but to reduce the antenna height h₀. This is because the display 102, a speaker, and other constituents which are placed on the other side of the base plate 105 having the built-in antenna 106 disposed thereon cannot be reduced in thickness for the purpose. With the smaller antenna height h₀, however, the capacitive coupling between the antenna element 106a and the base plate 105 is increased. This will result in poor matching, and accordingly lower the antenna characteristics.

### SUMMARY OF THE INVENTION

Therefore, an object of the present invention is to provide smaller-sized mobile radios in which their built-in antennas are high enough to enhance the antenna characteristics.

This object is achieved by a mobile radio having an antenna as set forth in the independent claim 1.

A further preferred embodiment is subject of the dependent claim 2.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a schematic illustration showing the structure of a mobile radio according to a first part of the present invention;
FIGS. 2 and 3 are schematic illustrations showing other structures of the mobile radio according to the first part of the present invention;
FIG. 4 is a schematic illustration showing the structure of a mobile radio according to a second part of the present invention;
FIGS. 5 and 6 are schematic illustrations showing other structures of the mobile radio according to the second part of the present invention;
FIG. 7 is a schematic illustration showing an exemplary cabinet applicable to the mobile radios according to the present invention; and
FIG. 8 is a schematic illustration showing the structure of a conventional mobile radio.

### DESCRIPTION OF THE PREFERRED EMBODIMENTS

Described below are parts of the present invention by referring to the accompanying drawings.

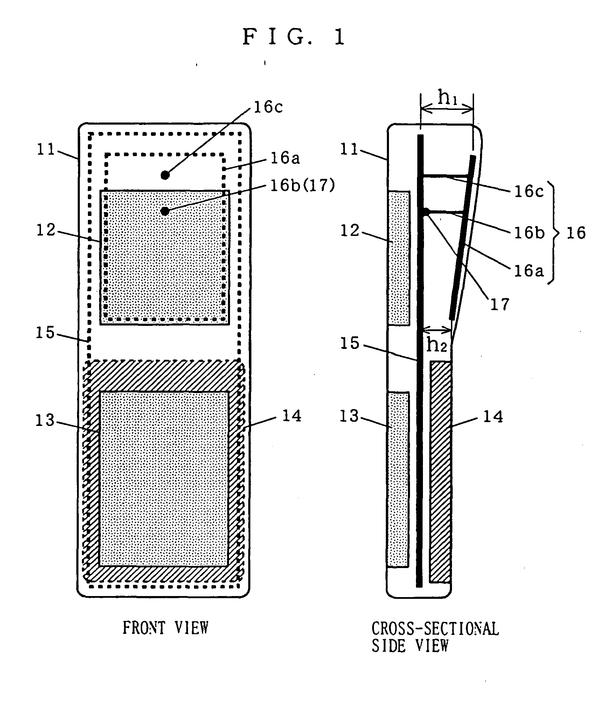

FIG. 1 schematically shows front and cross-sectional side views of a mobile radio according to a first part of the present invention.

In FIG. 1, the mobile radio of the first embodiment includes a cabinet 11 , a display 12 exemplified by a liquid crystal display, a key section 13 exemplified by a ten-key numeric pad, a battery 14, a built-in antenna 16, and a base plate 15 for electrical connections among those constituents. The built-in antenna 16 is structured by an antenna element 16a of a planar configuration, and two metal leads 16b and 16c. The antenna element 16a is provided with a predetermined voltage from a supply point 17 on the base plate 15 via the metal lead 16b. The antenna element 16a is connected to a ground (GND) level of the base plate 15 via the metal lead 16c. Here, operating the GND pattern of a circuit board as the base plate is absolutely possible. Also, any cabinet or chassis made of conductive materials can be surely used as the base plate. Even if the cabinets or chassises are not conductive, covering those with the conductive material will do.

Here, drop perpendiculars from both upper and lower ends of the antenna element 16a to the base plate 15. The length of the perpendicular at the upper end is now referred to as an upper height h₁, while the length at the lower end as a lower height h₂. The antenna element 16a is so slanted against the base plate 15 as to satisfy h₁ > h₂. Here, it is important that the metal leads 16b and 16c are so disposed as to be longer than the lower height h₂. Therefore the metal leads 16b and 16c are to be placed on the upper side of the built-in antenna 16, that is, the upper part of the cabinet 11.

With such placement, the metal lead 16b from its connecting portion (supply portion) on the antenna element 16a to the base plate 15, and the metal lead 16c from its connecting portion (short-circuiting portion) on the antenna element 16a to the base plate 15 become higher than the lower height h₂. This leads to easier impedance matching, and thus the antenna characteristics will be enhanced. Moreover, by slanting the antenna element 16a against the base plate 15 as such, the lower height h₂ increases the capacitive coupling between the antenna element 16a and the base plate 15. This will reduce the resonant frequency of the antenna, whereby the antenna is to be successfully downsized.

In the case where the built-in antenna 16 is structured as above, the rear part of the cabinet 11 is so formed as to slant in accordance with the antenna element 16a as shown in FIG. 1. The rear part of the cabinet 11 thus looks smooth while ensuring the lower height h₂ of the built-in antenna 16 is smaller. As a result, from a design perspective, the mobile radio has a better appearance, and users' hands do not cover the antenna part when holding the mobile radio.

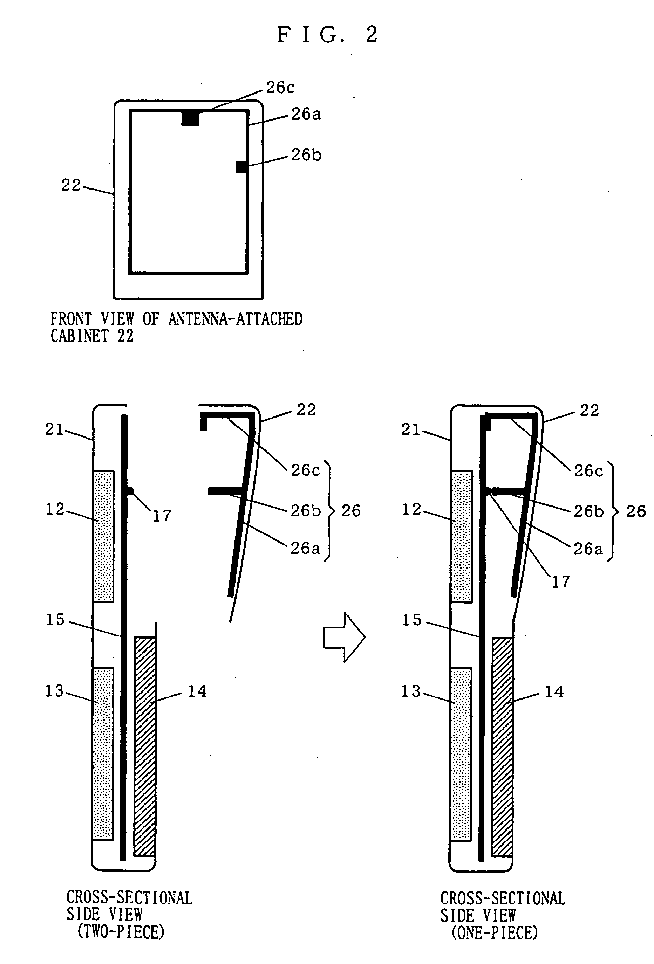

Here, instead of fixing the built-in antenna 16 of FIG. 1 to the base plate 15 as above, the built-in antenna 16 may be previously attached to the inside of the slanting part of the cabinet 11. FIG. 2 shows an example of the mobile radio in such a structure. Here, in FIG. 2, any constituent identical to that in FIG. 1 is provided with the same reference numeral.

The mobile radio of FIG. 2 is structured by a cabinet 21 and another cabinet with a built-in antenna 26 attached thereto (hereinafter, antenna-attached cabinet 22). The built-in antenna 26 is composed of an antenna element 26a, and two metal leads, i.e., a supply pin 26 and a shirt-circuit pin 26c. The antenna element 26a is fixed (attached) to the inside of the antenna-attached cabinet 22. To the antenna element 26a, the supply pin 26b and the short-circuiting pin 26c are electrically connected. Once such structured antenna-attached cabinet 22 is put together with the cabinet 21, the supply pin 26b is electrically connected to the supply point 17, and the short-circuiting pin 26c to the ground surface of the base plate 15.

With such a structure having the built-in antenna attached to the antenna-attached case 22 in advance, space adjustment between the antenna element 26a and the antenna-attached case 22 can be made with accuracy.

The cabinet of the mobile radio is generally made of dielectric material, and thus the resonant frequency of the antenna varies depending on the positional relationship between the cabinet and the antenna, i.e., the closer, the lower the resonant frequency. Accordingly, with the structure having the built-in antenna attached to the cabinet in advance, the resonant frequency of the antenna can be stabilized. As a result, the antenna characteristics can be also stabilized, and thus the band characteristics can be reduced in margin.

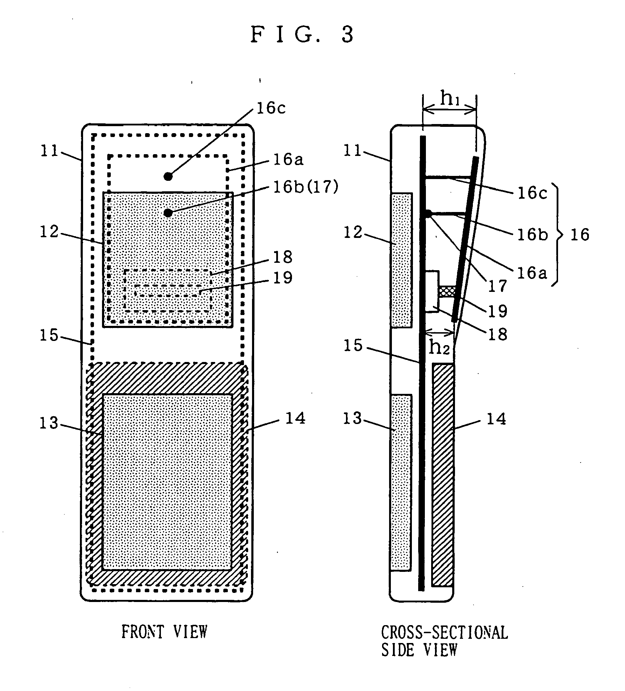

As another alternative structure, a shield may be placed between the built-in antenna 16 and the base plate 15 of FIG. 1. FIG. 3 shows an example of the mobile radio in such a structure. Here, in FIG. 3, any constituent identical to that in FIG. 1 is provided with the same reference numeral.

The mobile radio of FIG. 3 further includes a shield 18 and an antenna support base 19. The antenna element 16a is fixed via the antenna support base 19 to the shield 18 , which is placed on the base plate 15. Assuming here that the shield 18 has a wireless circuit therein. The original purpose of placing the shield 18 is to protect the wireless circuit provided therein from radio waves radiated from the antenna. In this case, the shield 18 also can lead to easier impedance matching of the antenna. This is because the capacitive coupling can be controlled by adjusting the height of the shield 18, or the space between the shield 18 and the antenna element 16a. Furthermore, the characteristics of the built-in antenna 16 can be stabilized by fixing the built-in antenna 16 with the help of the antenna support base 19. Moreover, with the antenna support base 19 made of dielectric material, the resonant frequency of the antenna will be lowered so that the antenna can surely be downsized.

In the mobile radio, the built-in antenna 16 is slanted against the base plate 15 so that the antenna height, i.e., space to the base plate 15, at the upper part of the antenna is larger than that at the lower part. This structure is not restrictive, and the upper end of the cabinet may be rounded from a design perspective, or the antenna element 16a may be provided with a conductor wall to increase the capacitive coupling with the base plate 15, for example. In such cases also, the same effects as above are surely expectable.

As described above, the built-in antenna is slanted against the base plate so that the space therebetween is decreased from the upper part to the lower, and the supply portion is placed on the upper. With such a structure, the antenna characteristics can be enhanced due to the supply portion placed on the upper, and the capacitive coupling can be increased due to the closeness between the lower part of the antenna and the base plate, successfully lowering the resonant frequency of the antenna. Furthermore, from a design perspective, users' hands do not cover the antenna part when holding the mobile radio, and the mobile radio has a better appearance.

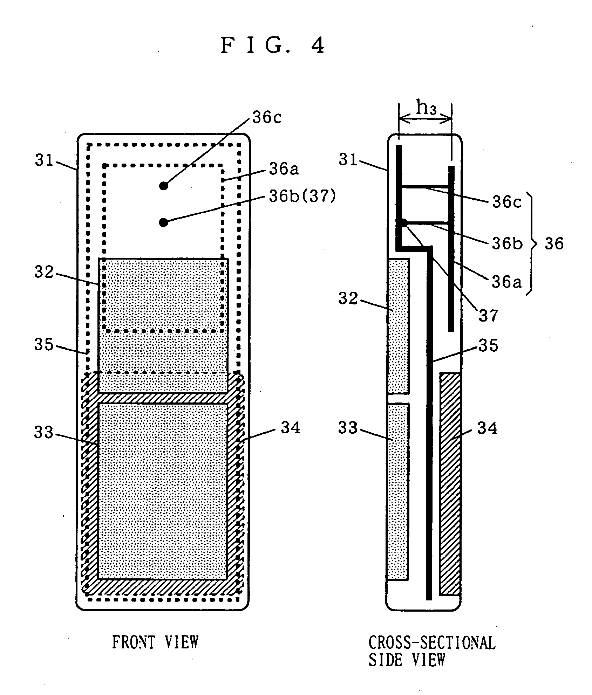

FIG. 4 schematically shows front and cross-sectional side views of a mobile radio according to a second part of the present invention.

In FIG. 4, the mobile radio includes a cabinet 31, a display 32 exemplified by a liquid crystal display, a key-section 33 exemplified by a ten-key numeric pad, a battery 34, a built-in antenna 36, and a base plate 35 for electrical connections among those constituents. The built-in antenna 36 is structured by an antenna element 36a of a planar configuration, and two metal leads 36b and 36c. The antenna element 36a is provided with a predetermined voltage from a supply point 37 on the base plate 35 via the metal lead 36b. The antenna element 36a is connected to a ground (GND) level of the base plate 35 via the metal lead 36c.

The base plate 35 is structured by an antenna-housing section which affects the antenna characteristics, and a circuit-housing section which is the rest of the base plate 35. Specifically, the antenna-housing section includes, for example, a portion (supply portion) at where the metal lead 36b is connected with the antenna element 36a, and a portion (short-circuiting portion) at where the metal lead 36c is connected with the antenna element 36a. In accordance with the desired antenna characteristics, the antenna-housing section is so positioned as to keep the built-in antenna 36 high enough, that is, to keep the space between the base plate 35 and the antenna element 36a large enough. The antenna-housing section is thus positioned toward the front side in the cabinet 31. On the other hand, the circuit-housing section is positioned toward the back of the cabinet 31 to provide a room for the display 32 and the key section 33. By structuring the base plate 35 as such, the cabinet 31 can accommodate the display 32 and the key section 33 therein without reducing the height h₃ of the built-in antenna 36. As a result, the cabinet 31 can be successfully reduced in thickness.

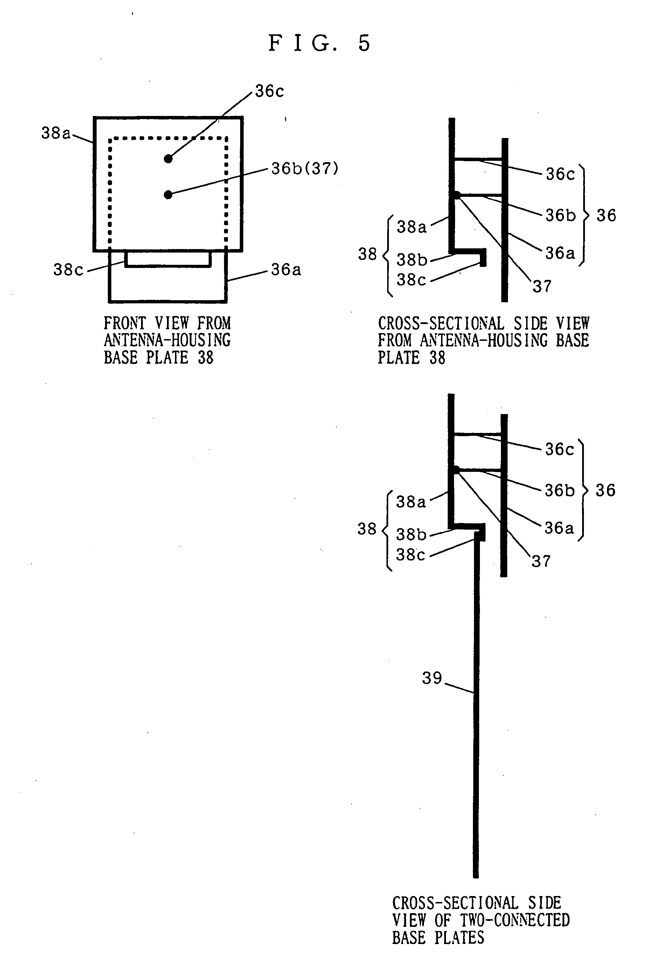

Here, alternatively, the base plate 35 may be structured by several base plates; some are for housing the built-in antenna, and some are for housing the circuit. FIG. 5 shows an example of the base plate in such a structure. Here, in FIG. 5, any constituent identical to that in FIG. 4 is provided with the same reference numeral.

In FIG. 5, the base plate is structured by an antenna-housing base plate 38, and a circuit base plate 39. The antenna-housing base plate 38 is composed of a base plate 38a, a side wall 38b, and a junction 38c. The base plate 38a is connected to the junction 38c via the side wall 38b. The built-in antenna 36 is placed on the base plate 38a. To assemble the base plate of this type, put the built-in antenna 36 first on the antenna-housing base plate 38, and then connect the antenna-housing base plate 38 to the circuit base plate 39 via the junction 38c. In such a manner, the antenna part, i.e., the antenna-housing base plate 38 plus the built-in antenna 36, can be manufactured separately, and thus the productivity will be increased.

Characteristically, the antenna-housing base plate 38 and the circuit base plate 39 are formed and placed separately from each other so that their surfaces are not aligned on the same plane. Here, by adjusting the space between the side wall 38b and the antenna element 36a, the capacitive coupling can be accordingly controlled, and this can lead to easier impedance matching. Here, the junction 38c may simply abut to the circuit base plate 39 as long as electrical connection is established therebetween.

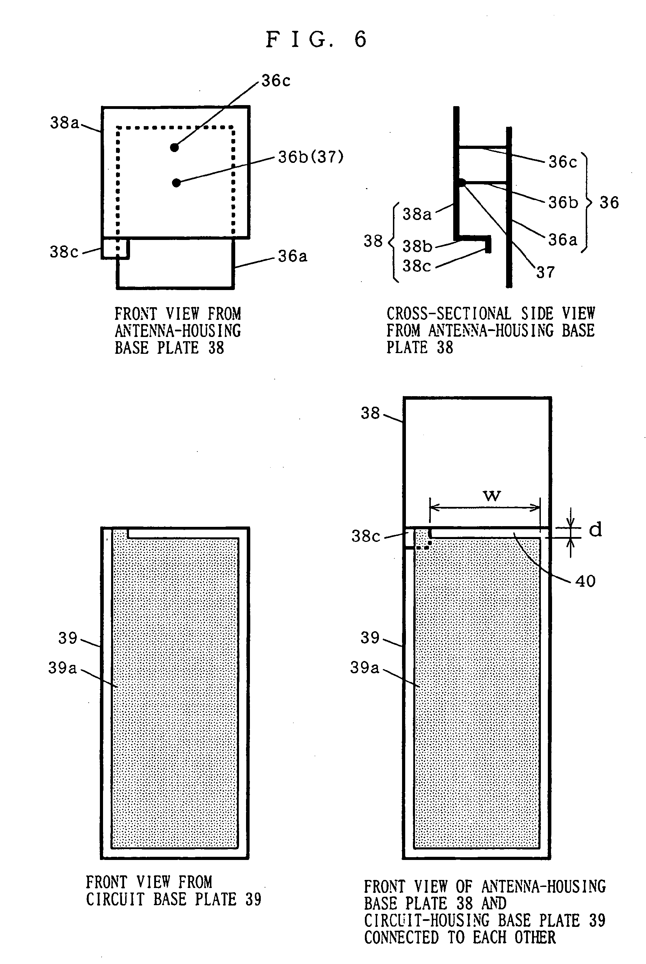

By referring to FIG. 6, if the junction 38c of the antenna-housing base plate 38 and a conductive pattern 39a on the circuit base plate 39 are both changed in shape, a slit 40 may be generated between the antenna-housing base plate 38 and the circuit base plate 39 when those are coupled to each other. In this case, if the slit 40 is so generated as to be 1/4 λ (wavelength) in length *w*, the impedance considering the circuit base plate 39 becomes maximum. Accordingly, the built-in antenna 36 can be designed irrelevant to the circuit base plate 39, and the built-in antenna 36 thus becomes more versatile, suitable for mass production. Explained by referring to FIG. 6 is the case where the slit 40 is adjusted in length *w* and width *d* by changing the junction 38c and the conductive pattern 39a in shape. Alternatively, the slit 40 may be adjusted by using any other parameters.

In the case of FIG. 6, although the slit 40 is provided between the antenna-housing base plate 38 and the circuit base plate 39, this is not restrictive. In the case where the base plate includes no side wall 38b as the base plate 15 of the first embodiment, there is no problem of providing a slit.

Moreover, the characteristics of the built-in antenna may be optimized by adjusting, by the slit, the length of a current path. If this is the case, the number of slits is not restricted to one. For example, if a plurality of slits are provided, the base plate can be increased in size equivalently. Also, if the slits are provided to the base plate where the current distribution is high in such a manner as to across the current path, the base plate can be surely increased in size equivalently.

Here, the structures of figures 1-3 and 4-5 can surely be combined together. With the resultant structure, the antenna can be put higher so that the antenna characteristics can be enhanced. The invention combines the teachings of figures 3 and 5.

As described above, in the mobile radio of the invention, the base plate is structured by the antenna-housing section and the circuit-housing section, and these sections are so placed as not to align on the same plane for the purpose of providing a room for other constituents. With such a structure, the built-in antenna can be high enough without increasing the thickness of the mobile radio, successfully leading to enhancement in antenna characteristics.

Here, described are the cases where the built-in antenna is a planar inverted F antenna, and this is not restrictive. The same effects are surely achieved by slanting the built-in antenna so that the part of the antenna where the current distribution is the highest, i.e., the part where determines the height of the antenna, is put higher than the rest. The same effects are to be achieved by structuring, instead of slanting, the built-in antenna as steps to change the height thereof. The same effects are surely achieved by structuring the built-in antenna in such a manner that the part of the antenna where the current distribution is the highest, i.e., the part where determines the height of the antenna, is put higher than the rest.

Here, although the mobile radios of the invention are provided with one antenna, this is not restrictive. The built-in antenna of the present invention is surely used together with an extendable whip antenna, or several of the built-in antennas are used together. In such case as well, the same effects are to be achieved.

The mobile radio of the present invention surely covers a plurality of frequency bands. In the case of using several antennas together, those antennas can be so structured as to cover a plurality of frequency bands. When using an antenna capable of covering a plurality of frequency bands, a short-circuiting portion (or a supply portion) for a first resonant frequency band, and a short-circuiting portion (or a supply portion) for a second resonant frequency band are both provided on its antenna element so that conduction for the short-circuiting portions (or voltage supply to the supply portions) are selectively controlled. With such a structure, either of the first resonant frequency band or the second resonant frequency band can be covered. In order to cover these two resonant frequency bands at the same time, the antenna element may be provided with a slot so that the original antenna element determines the first resonant frequency band, and the slot part the second resonant frequency band.

Moreover, filling partially or entirely a space between the built-in antenna and the base plate with the dielectric material will downsize the built-in antenna, and also stabilize it on the base plate.

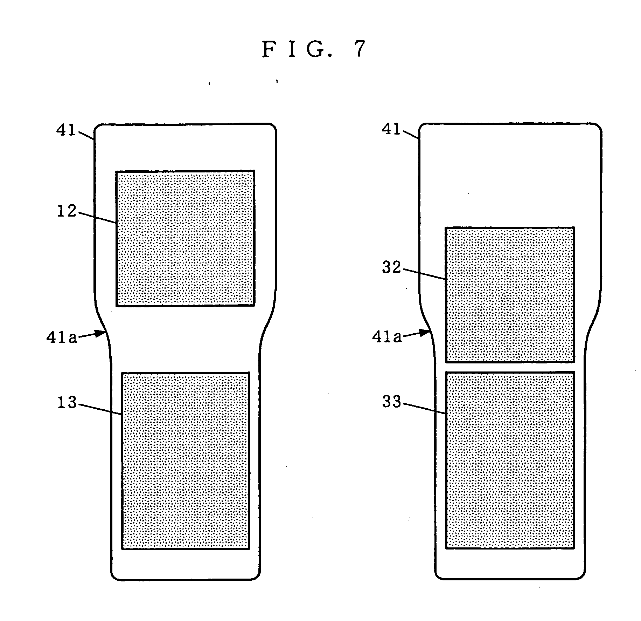

Lastly, as to the mobile radios of the invention, FIG. 7 shows an example of their cabinet which is designed to decrease in width at some point for the users to place their fingers thereon.

In FIG. 7, the width of a cabinet 41 is started to narrow at the lower end of the antenna-housing section which affects the antenna characteristics, and hereinafter the area therearound is referred to as a finger-placing section 41a. With the finger-placing section 41a, the users may hold the lower part of the mobile radio, and thus the antenna characteristics are prevented from being deteriorated. Moreover, since the upper part of the cabinet 41 remains wide, the width of the built-in antenna can be wider. Specifically for the mobile radio of the first embodiment, the size of the display can be increased. The resultant mobile radio will be considered user-friendly as an information terminal.

Herein, it is surely possible to provide a plurality of finger-placing sections, and if so, arranging those in order in the vertical direction may ease the users to hold the mobile radio. Also, the users may know which part of the mobile radio they are expected to hold, avoiding the antenna part.

## Claims

1. A mobile radio having an antenna equipped for receiving and transmitting radio waves, said mobile radio comprising:
a base plate (15, 35) for providing a ground level;
a built-in antenna (16, 26, 36) which is disposed on said base plate (15, 35); and
a case (11, 21, 31) defining an outer appearance of said mobile radio,
wherein
said built-in antenna (16, 26, 36) is provided with a supply portion for providing power to said built-in antenna (16, 26, 36), the supply portion being at an upper end of said built-in antenna (16, 26, 36) when said mobile radio is in a standing position upon a lower end, and is disposed so that a space between said built-in antenna (16, 26, 36) and said base plate (15, 35) decreases from said upper end to said lower end;
a shield (18) is provided between said built-in antenna (16, 26, 36) and said base plate (15, 35), and
said built-in antenna (16, 26, 36) is an antenna of a planar configuration, and is slanted so that the space between said built-in antenna (16, 26, 36) and said base plate (15, 35) is larger at said upper end than at said lower end,
**characterized in that**
said case (11, 21, 31) is formed such that a part of said case (11, 21, 31) that covers said built-in antenna (16, 26, 36) has a thickness that gradually decreases from said upper end towards said lower end in accordance with the slant of said built-in antenna (16, 26, 36),
said base plate (15, 35) comprises an antenna housing base plate (38) on which said built-in antenna (16, 26, 36) is disposed, and a circuit base plate (39) which is a remainder of said base plate (15, 35), and
said antenna-housing base plate and said circuit base plate are not aligned on a same plane, and are joined at a junction (38c) via a side wall (38b).

2. The mobile radio according to claim 1, wherein
said built-in antenna (16, 26, 36) is fixed by support base (19) which is disposed on said shield (18).

## Patentansprüche

1. Tragbares Funkgerät, aufweisend eine Antenne, die zum Empfangen und Senden von Funkwellen eingerichtet ist, wobei das tragbare Funkgerät aufweist:
eine Basisplatte (15, 35) zum Bereitstellen eines Grundniveaus;
eine eingebaute Antenne (16, 26, 36), die auf der Basisplatte (15, 35) angeordnet ist; und
ein Gehäuse (11, 21, 31), welches eine äußere Erscheinung des tragbaren Funkgeräts definiert, worin
die eingebaute Antenne (16, 26, 36) mit einem Versorgungsabschnitt versehen ist zum Bereitstellen von Leistung an die eingebaute Antenne (16, 26, 36), wobei der Versorgungsabschnitt sich an einem oberen Ende der eingebauten Antenne (16, 26, 36) befindet, wenn das tragbare Funkgerät in einer stehenden Position auf einem unteren Ende ist, und so angeordnet ist, dass ein Raum zwischen der eingebauten Antenne (16, 26, 36) und der Basisplatte (15, 35) von dem oberen Ende zu dem unteren Ende abnimmt;
ein Schirm (18) ist zwischen der eingebauten Antenne (16, 26, 36) und der Basisplatte (15, 35) bereitgestellt, und
die eingebaute Antenne (16, 26, 36) ist eine Antenne von einer Planarkonfiguration und ist so geneigt, dass der Raum zwischen der eingebauten Antenne (16, 26, 36) und der Basisplatte (15, 35) an dem oberen Ende größer ist als an dem unteren Ende,
**dadurch gekennzeichnet, dass**
das Gehäuse (11, 21, 31) so geformt ist, dass ein Teil des Gehäuses (11, 21, 31), welcher die eingebaute Antenne (16, 26, 36) bedeckt, eine Dicke hat, welche sich graduell von dem oberen Ende zu dem unteren Ende hin vermindert in Übereinstimmung mit der Neigung der eingebauten Antenne (16, 26, 36),
die Basisplatte (15, 35) weist eine Antennengehäuse-Basisplatte (30) auf, auf welcher die eingebaute Antenne (16, 26, 36) angeordnet ist, und eine Schaltungsbasisplatte (39), die ein Rest der Basisplatte (15, 35) ist, und
die Antennengehäuse-Basisplatte und die Schaltungsbasisplatte sind nicht in einer gleichen Ebene ausgerichtet und sind an einer Verbindungsstelle (38c) über eine Seitenwand (38b) verbunden.

2. Tragbares Funkgerät nach Anspruch 1, worin
die eingebaute Antenne (16, 26, 36) durch eine Trägerbasis (19) befestigt ist, die auf dem Schirm (18) angeordnet ist.

## Revendications

1. Dispositif radio mobile ayant une antenne équipée pour recevoir et transmettre des ondes radio, ledit dispositif radio mobile comprenant :
une plaque de base (15, 35) pour fournir un niveau de terre ;
une antenne incorporée (16, 26, 36) qui est disposée sur ladite plaque de base (15, 35) ; et
un étui (11, 21, 31) définissant une apparence extérieure dudit dispositif radio mobile, dans lequel
ladite antenne incorporée (16, 26, 36) est pourvue d'une portion d'alimentation pour fournir de la puissance à ladite antenne incorporée (16, 26, 36), la portion d'alimentation étant à une extrémité supérieure de ladite antenne incorporée (16, 26, 36) lorsque ledit dispositif radio mobile est dans une position debout sur une extrémité inférieure, et est disposée de sorte qu'un espace entre ladite antenne incorporée (16, 26, 36) et ladite plaque de base (15, 35) diminue à partir de ladite extrémité supérieure à ladite extrémité inférieure ;
un blindage (18) est fourni entre ladite antenne incorporée (16, 26, 36) et ladite plaque de base (15, 35), et
ladite antenne incorporée (16, 26, 36) est une antenne d'une configuration planaire, et est inclinée de sorte que l'espace entre ladite antenne incorporée (16, 26, 36) et ladite plaque de base (15, 35) soit plus grand au niveau de ladite extrémité supérieure qu'au niveau de ladite extrémité inférieure,
**caractérisée en ce que**
ledit étui (11, 21, 31) est formé de sorte qu'une partie dudit étui (11, 21, 31) qui couvre ladite antenne incorporée (16, 26, 36) ait une épaisseur qui diminue graduellement à partir de ladite extrémité supérieure vers ladite extrémité inférieure en conformité avec l'inclinaison de ladite antenne incorporée (16, 26, 36),
ladite plaque de base (15, 35) comprend une plaque de base de logement d'antenne (38) sur laquelle ladite antenne incorporée (16, 26, 36) est disposée, et une plaque de base de circuit (39) qui est une partie restante de ladite plaque de base (15, 35), et
ladite plaque de base de logement d'antenne et ladite plaque de base de circuit ne sont pas alignées sur un même plan, et sont reliées à une jonction (38c) à travers une paroi latérale (38b).

2. Dispositif radio mobile selon la revendication 1, dans lequel
ladite antenne incorporée (16, 26, 36) est fixée par une base de support (19) qui est disposée sur ledit blindage (18).
